# FASCICULE DE BREVET EUROPEEN

(11) **EP 3 119 734 B1**
(45) Date de publication et mention de la délivrance du brevet: **17.07.2019**
(21) Numéro de dépôt: 15714293.6
(22) Date de dépôt: 17.03.2015
(51) Int. Cl.: C05F 17/02

(54) **PROCEDE ET INSTALLATION POUR LE TRAITEMENT DE DECHETS ET RESIDUS URBAINS ET/OU INDUSTRIELS.**
VERFAHREN UND VORRICHTUNG ZUR BEHANDLUNG VON SIEDLUNGS- UND/ODER INDUSTRIEABFÄLLEN
PROCESS AND FACILITY FOR TREATING MUNICIPAL AND/OR INDUSTRIAL WASTE

(30) Priorité: 18.03.2014 FR 1452209
(43) Date de publication de la demande: 25.01.2017
(73) Titulaire: SUEZ Groupe, 92040 Paris la Défense Cedex (FR)
(72) Inventeur: FLEURY, Sylvie, F-78125 Orphin (FR); SOMMAIN, Arnaud, F-34110 Mireval (FR); GREZE, Olivier, F-34970 Lattes (FR); THIBAUT, Romain, F-78360 Montesson (FR); CAMINADE, Bruno, F-77350 Boissise La Bertrand (FR)
(74) Mandataire: IPAZ
(86) Numéro de dépôt international: PCT/IB2015/051929
(87) Numéro de publication internationale: WO 2015/140699

(56) Documents cités:
- EP-A1- 0 445 102
- WO-A1-94/29431
- FR-A1- 2 346 437

## Description

La présente invention concerne un procédé pour le traitement de déchets par pré-fermentation des fractions organiques valorisables en voie aérobie et/ou anaérobie contenues dans les déchets.

Une installation pour la mise en oeuvre d'un tel procédé était originellement conçue comme technique de compostage à partir d'ordures brutes. Ce type d'installation est aujourd'hui utilisé préférentiellement comme une étape fondamentale dans la préparation des déchets fermentescibles, préalablement à leur traitement final (stabilisation, élaboration de compost commercialisable). Une telle installation permet également la pré-fermentation aérobie des déchets préalablement à leur introduction dans une installation de compostage et/ou de production de biogaz.

Le document EP 1640446 décrit une installation pour le traitement de déchets par réduction granulométrique des fractions organiques valorisables en voie aérobie et/ou anaérobie contenues dans les déchets. Une telle installation est utilisée pour préparer les déchets préalablement à leur transformation en compost commercialisable ou à leur méthanisation. Cette installation permet en effet de réduire granulométriquement les déchets et de réaliser une première étape de fermentation aérobie des déchets grâce à un séjour des déchets de 2 à 4 jours dans l'installation.

### [-1a-]

Pour cela, une telle installation comporte généralement :
- un tambour cylindrique, d'une longueur comprise entre 24 et 50 m pour un diamètre compris entre 3.5 et 5m dans lequel les déchets sont introduits ;
- un système d'entraînement en rotation du tambour.

Le tambour comporte une première extrémité, dite extrémité amont, par laquelle les déchets sont introduits et une deuxième extrémité, dite extrémité aval, qui est pourvue généralement d'un dispositif en tôle perforée permettant de diminuer les fluctuations de débit et par laquelle les déchets ressortent du tambour.

Le document EP 0445102 décrit un procédé de traitement aérobie (compostage) à faible odeur d'excréments liquides et/ou solides d'origine animale en combinaison avec de la matière organique carbonée, ce procédé utilisant un tambour rotatif de fermentation.

Les déchets, en particulier les ordures ménagères, sont introduits dans le tambour par l'extrémité amont. Les déchets sont brassés sans arrêt dans le tambour en rotation, dont la durée de révolution est généralement comprise entre 0,5 et 1 minute selon la période de la journée. Le tambour est ventilé afin de mettre en oeuvre un processus de fermentation aérobie. La température peut monter jusqu'à 60°C et la matière organique commence à se décomposer. Après plusieurs jours de temps de séjour dans le tambour, les déchets sortent du tambour et sont généralement traités par le crible situé en aval. On obtient alors deux fractions :
- une fraction fine riche en matière organique pré-fermentée, qui va subir le traitement biologique;
- une fraction plus grossière constituant le refus.

Une telle installation est un équipement clé qui permet la maximisation de l'extraction de la fraction fermentescible dans les OMR (ordures ménagères résiduelles) communément appelées « poubelle grise ».

Dans les installations de l'art antérieur, l'alimentation en déchets du tambour est réalisée, depuis la zone de réception et de stockage, généralement en semi-continu, parfois en continu, selon le nombre de postes de fonctionnement et le degré d'automatisation du mode d'alimentation (chargeur, pont-grappin,...).

L'extraction en sortie du tambour est réalisée uniquement pendant le fonctionnement du crible en aval de la sortie du tambour, sensible au colmatage, et qui nécessite de nombreuses opérations de manutention pour le stockage des fractions criblées (refus et passants). Bien qu'automatisées, cette gestion et cette surveillance requièrent la présence de personnel qui, en pratique, n'est pas assurée en continu, et qui au final impose un fonctionnement semi-continu de l'extraction des déchets prétraités.

D'un point de vue fonctionnel, le tambour peut être assimilé à un stockage tampon permettant de dissocier les équipements situés en amont et en aval. Son alimentation peut être effectuée avec ou sans fonctionnement de l'extraction et vice-versa.

Il en résulte un temps de passage variable des produits dans le tambour, et des caractéristiques associées des matières, au moment de leur extraction, elles-aussi variables, notamment concernant l'humidité.

Le mode de gestion résumé ci-dessus génère de nombreux inconvénients, en particulier :
- des produits aux caractéristiques variables et inconstantes (humidité, granulométrie,..)
- des performances variables sur le criblage qui s'en suit, et très souvent dégradées par la forte humidité moyenne des produits à cribler,
- des colmatages accrus par les collages et des besoins de maintenance importants sur la chaîne de criblage (crible et convoyeurs associés),
- des émissions olfactives par le brassage du produit pré-fermenté depuis la sortie du tambour jusqu'aux exutoires respectifs des fractions

L'invention vise à remédier aux inconvénients de l'état de la technique, évoqués précédemment, en proposant un procédé et une installation pour le traitement des déchets par pré-fermentation et par brassage mécanique, avec possibilité de maîtriser de façon automatisée l'alimentation et l'extraction continues des déchets de part et d'autre du tambour.

Un autre but de l'invention est d'optimiser les performances de l'étape ultérieure de criblage.

Pour ce faire, selon l'invention, le procédé de traitement de déchets par réduction granulométrique et fermentation aérobie, préalablement à un traitement final, en particulier de stabilisation, ou de compostage ou de méthanisation, selon lequel :
- les déchets sont introduits en semi-continu, ou en continu, à une extrémité d'un tambour rotatif sensiblement horizontal, apte à délivrer à son autre extrémité les déchets prétraités,
- le tambour est ventilé et les déchets subissent, dans le tambour, la réduction granulométrique et une première étape de fermentation aérobie, selon un séjour de durée appropriée, en particulier de 2 à 4 jours,
- les déchets prétraités sont soumis à un criblage pour séparer une fraction de granulométrie plus fine enrichie en matières organiques d'une fraction plus grossière,
est caractérisé en ce que :
- la sortie des déchets du tambour est assurée en continu,
- un stockage des déchets prétraités est effectué en sortie du tambour,
- une ventilation des déchets prétraités stockés est assurée,
- et les déchets prétraités après stockage sont transférés au criblage.

L'invention propose ainsi un procédé pourvu d'un système permettant de stocker et assécher du produit pré-fermenté avant son post-traitement par criblage. Le mode de stockage ventilé et confiné, directement situé à la jetée des produits sortant du tambour, assure une capacité de stockage suffisante pour pallier la présence restreinte et/ou intermittente de personnel (fin de semaine, jour férié,...), assurant la gestion du criblage.

De préférence, la durée du stockage des déchets prétraités est de plusieurs heures, de préférence de 0.5 à 5 jours, avantageusement 2 jours.

La ventilation de la matière humide stockée, avantageusement réalisée avec de l'air à température ambiante ou réchauffé, est prévue pour ajuster et réduire la teneur en humidité moyenne des déchets afin de les rendre moins collants, plus dissociables et moins odorants avant leur post-traitement par criblage

Avantageusement, le stockage est effectué dans un local confiné, englobant l'extrémité de sortie du tambour, le stockage étant situé directement à la jetée des produits sortant du tambour.

L'air de ventilation sortant du stockage peut être dirigé dans le tambour rotatif pour contribuer à la ventilation du tambour avant d'être envoyé à un traitement, en particulier de désodorisation.

Le débit d'air de ventilation des déchets stockés peut être compris entre 3 et 10 m3 d'air/h/m3 de produit stocké, généralement 5 m3 d'air/h/m3 de produit stocké.

Le taux de renouvellement de l'air dans le local confiné peut être maintenu entre 3 et 10 m3 d'air/h/m3 de local confiné, généralement 5 m3 d'air/h/ m3 de local confiné.

L'invention concerne également une installation pour le traitement des déchets par réduction granulométrique et fermentation aérobie, l'installation comportant
- un tambour apte à recevoir des déchets à traiter;
- un système de ventilation du tambour ;
- des moyens d'entrainement en rotation du tambour,
caractérisée en ce qu'elle comporte :
- un dispositif de sortie du tambour permettant une sortie en continu des déchets prétraités,
- au moins un dispositif de stockage des déchets prétraités en sortie du tambour;
- au moins un dispositif de ventilation des déchets stockés,
- un dispositif de criblage distant du dispositif de stockage,
- et des moyens de transfert des déchets stockés au dispositif de criblage.

Le fait de stocker le produit sortant du tambour permet de l'extraire en continu sans obligation de le post-traiter immédiatement. En outre, durant cette période de stockage comprise entre 0,5 à 5 jours, avantageusement 2 jours, on ventile la matière humide stockée et, par conséquent, on peut ajuster et réduire la teneur en humidité moyenne des déchets afin de les rendre moins collants, plus dissociables et moins odorants. Le volume utile de stockage à considérer est généralement de 300 m3 par jour stocké et par tambour rotatif.

L'humidité d'un produit, quand elle est importante, perturbe le processus de stratification des grains dans le lit du crible. Elle est responsable de l'obturation progressive des ouvertures de la surface criblante jusqu'à empêcher la séparation des grains fins et grossiers. Une perte d'1 à 5% d'humidité, peut améliorer la performance de criblage de 5 à 20%.

L'invention permet donc de mieux gérer la progression des déchets dans le tambour avec une constance des temps de séjour, mais aussi les opérations de criblage et de convoyage qui s'en suivent, leur maintenance et leur disponibilité, ainsi que les conditions d'ambiances de travail autour des équipements concernés.

L'installation peut également présenter une ou plusieurs des caractéristiques ci-après prises individuellement ou selon toutes les combinaisons techniquement possibles.

Le dispositif de stockage peut présenter une capacité de stockage de plusieurs heures, de préférence de 0.5 à 5 jours, avantageusement 2 jours, suffisante pour pallier l'absence momentanée de personnel assurant le suivi du criblage.

Le dispositif de stockage peut comporter une fosse et les moyens de transfert des déchets stockés peuvent comprendre un pont-grappin afin de brasser et faire transiter les déchets vers le criblage. La fosse peut comporter un plancher perforé pour la ventilation sous le plancher et pour une diffusion de l'air de séchage à travers le produit stocké.

La fosse et l'extrémité de sortie du tambour ventilé sont avantageusement situées dans un local commun confiné. L'installation peut comporter des moyens d'extraction de l'ensemble des airs viciés, comprenant air de fermentation du tambour et air de séchage de la fosse, avec circulation dans le tambour à contre-courant des déchets, vers une installation de désodorisation, pour éviter ainsi la condensation de l'air vicié dans le local.

En variante, le dispositif de stockage peut comporter un tunnel à fond mouvant ou un second stockage dynamique ventilé à tambour tournant.

Le volume utile du dispositif de stockage peut être de 300m3 par jour stocké et par tambour rotatif.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs.

Sur ces dessins :
- Fig. 1 est une vue schématique d'une installation selon l'invention avec fosse de stockage en sortie de tambour.
- Fig. 2 est une vue, à plus grande échelle, selon la flèche II de Fig.1, de l'extrémité de sortie du tambour, et
- Fig.3 est une vue schématique, semblable à Fig.1, d'une variante de l'installation selon l'invention avec tunnel à fond mouvant pour le stockage en sortie de tambour.

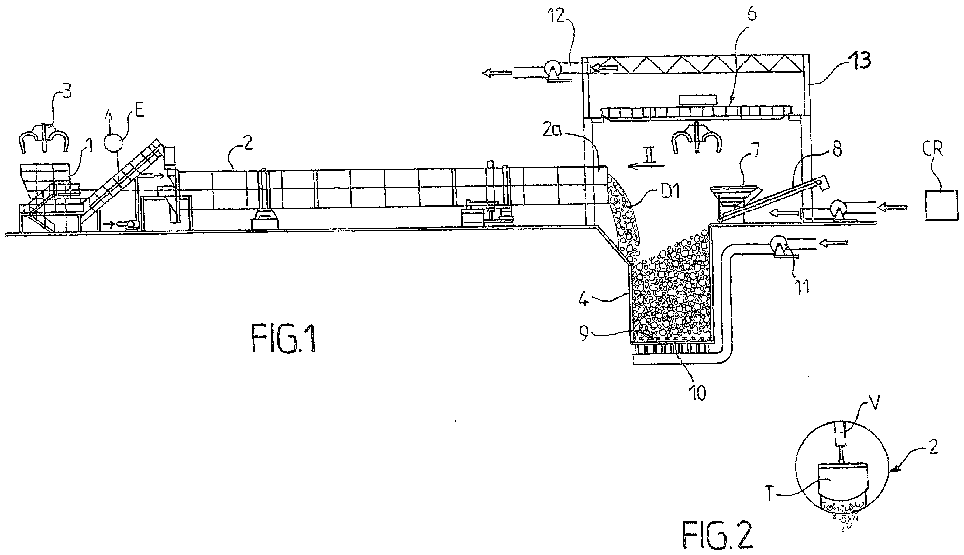

En se reportant à Fig. 1, on peut voir que les déchets sont introduits dans la trémie 1 du tambour rotatif 2, ou tambour tournant, par gravité à l'aide d'un pont grappin 3. Ce mode d'alimentation généralement semi-continu, peut être automatisé et rendu continu.

Dans le tambour 2 les déchets progressent et certains se décomposent. La rotation du tambour, le changement de densité et l'apport de déchets « frais » assurent cette progression.

La sortie des déchets du tambour 2 se fait en continu. Selon un mode de réalisation, le tambour 2 est équipé d'un dispositif de sortie en continu, avec porte automatisée T (Fig.2) créant une restriction de la sortie du tube (porte ouverte). Dans ce mode de réalisation, on pilote l'ouverture de la porte T, commandée par un moyen de déplacement V, pour extraire les déchets. Son degré d'ouverture peut être réglé et constituer un moyen supplémentaire de régulation du taux de remplissage à l'intérieur du tambour, ce qui permet de mieux contrôler la qualité du traitement des déchets dans le tambour 2.

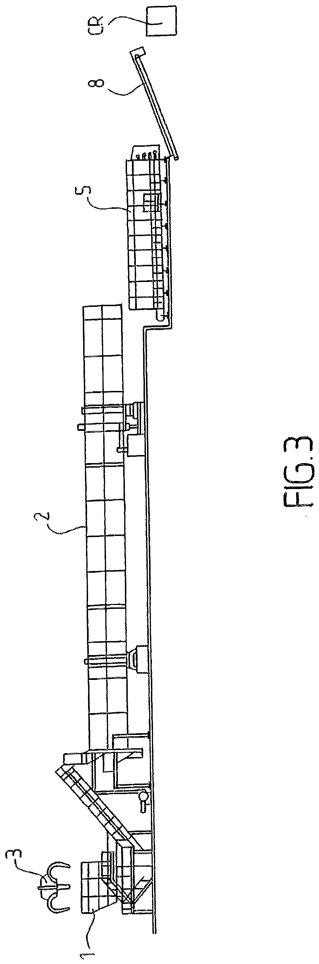

A la sortie d'un seul tambour, les déchets partiellement fermentés D1 chutent librement dans un dispositif de stockage, à savoir une fosse de stockage 4 selon Fig.1 ou bien, selon Fig.3, un tunnel 5 à fond mouvant. La capacité de stockage peut être d'environ 600 m3 de volume utile pour 2 jours de stocks par tambour. Au-dessus de la fosse 4, un pont-grappin 6 est prévu pour brasser régulièrement les déchets en transit afin de remuer la matière et contribuer ainsi à la bonne diffusion de l'air insufflé à travers le tas en fond de fosse. Sur Fig.3, les éléments identiques à ceux décrits pour Fig.1 sont désignés par les mêmes références, sans que leur description soit reprise.

Le pont-grappin 6 sert également de moyen de reprise, ou de transfert, des déchets pour alimenter une trémie 7 puis un convoyeur 8 qui transporte les déchets vers la zone de criblage CR, située dans un autre local.

Le débit de déchets prétraités peut alors être lissé pour correspondre parfaitement à celui du crible, ce qui est très difficile à réaliser directement en sortie du tube tournant car les déchets sortent « par paquets », de façon irrégulière, avec des variations de débit instantanées très importantes.

La fosse dispose d'un plancher 9, intégrant :
- soit des caniveaux qui quadrillent la surface du fond
- soit un réseau 10 de diffusion avec tubes et piquages,
que l'on alimente en air depuis le niveau de référence via un ventilateur 11, préférentiellement depuis un autre local de la filière où de l'air vicié est à renouveler. Cet air peut être avantageusement réchauffé.

Dans l'exemple présent, le débit d'air insufflé en fond de fosse à travers le tas de déchets en stock est de l'ordre de 3000 Nm3/h. Ce débit d'air, très chargé en humidité et en composés odorants, se trouve dans un local confiné 13 englobant l'extrémité de sortie 2a du tube tournant 2. Ce tube 2 est également balayé par de l'air, de l'ordre de 5000 Nm3/h, à contre-courant, c'est-à-dire depuis la sortie des produits vers l'entrée. Cette association confinée permet donc d'utiliser l'air vicié qui vient de traverser les déchets stockés pour une partie des besoins du tube tournant. L'installation comporte des moyens d'extraction E, formés par un ou plusieurs ventilateurs, pour l'ensemble des airs viciés, comprenant air de fermentation du tambour et air de séchage de la fosse, avec circulation dans le tambour à contre-courant des déchets, vers une installation de désodorisation, pour éviter ainsi la condensation de l'air vicié dans le local 13. On minimise ainsi les volumes d'air chargé à traiter par le système de désodorisation de l'usine qui traite tous les airs des bâtiments et airs de processus de compostage ou maturation. Les moyens d'extraction E constituent également le système de ventilation du tambour 2.

Une extraction d'air 12 peut être prévue en haut du local 13, et une ou plusieurs entrées d'air peuvent être prévues en partie basse, sur la droite selon Fig.1.

De plus on peut aussi plus facilement ventiler le tambour rotatif 2 en continu, ce qui est plus aléatoire dans un mode de fonctionnement où les déchets sont extraits par intermittence. Il faut cependant apporter un complément de ventilation de ce tube tournant, qui participe également au complément pour assurer le taux de renouvellement minimal du local confiné, celui-ci dépendant de son volume.

### Applications industrielles

De par cette étape de stockage et déshumidification des produits sortant du tambour tournant, le bilan matière est optimisé :
- dans la filière méthanisation / compostage : on extrait davantage de matières fermentescibles au tonnage effectivement traité au niveau du crible aval, de quelques pourcents selon la typologie du crible retenu. La fraction à méthaniser est augmentée.
- dans la filière compostage seul ou méthanisation / compostage, on produit davantage de compost normé et de qualité : environ 1/3 sur les quelques pourcents gagnés précédemment sur le crible.

Dans les deux cas, la suite des opérations de tri et de séparation, s'il y en a comme par exemple : criblage, déferraillage, séparation balistique / densimétrique,... s'en trouvent améliorées par une siccité accrue du mélange de produits (augmentation de 1 à 10 % de la siccité) et libèrent moins d'émissions olfactives dans les bâtiments.

Dans tous les cas les conditions d'exploitation du tambour tournant sont rendues plus constantes et offrent des modes de gestion de l'aval de la filière déconnectées de cette étape. Cette possibilité procure une capacité d'intervention plus importante pour de la maintenance et assure une augmentation de la disponibilité globale d'une usine de traitement des déchets.

## Revendications

1. Procédé de traitement de déchets par réduction granulométrique et fermentation aérobie, préalablement à un traitement final, en particulier de stabilisation, ou de compostage ou de méthanisation, selon lequel :
- les déchets sont introduits en semi-continu, ou en continu, à une extrémité d'un tambour rotatif (2) sensiblement horizontal, apte à délivrer à son autre extrémité les déchets prétraités,
- le tambour est ventilé et les déchets subissent, dans le tambour, la réduction granulométrique et une première étape de fermentation aérobie, selon un séjour de durée appropriée, en particulier de 2 à 4 jours,
- les déchets prétraités sont soumis à un criblage pour séparer une fraction de granulométrie plus fine enrichie en matières organiques d'une fraction plus grossière,
- la sortie des déchets (D1) du tambour (2) est assurée en continu,
- un stockage (4,5) des déchets prétraités est effectué en sortie du tambour,
- une ventilation des déchets prétraités stockés est assurée,
- et les déchets prétraités après stockage sont transférés au criblage
**caractérisé en ce que** l'air de ventilation sortant du stockage est dirigé dans le tambour rotatif (2) pour contribuer à la ventilation du tambour avant d'être envoyé à un traitement en particulier de désodorisation.

2. Procédé selon la revendication 1, **caractérisé en ce que** la durée du stockage des déchets prétraités est de plusieurs heures, de préférence de 0,5 à 5 jours, avantageusement 2 jours.

3. Procédé selon la revendication 1 ou 2, **caractérisé en ce que** la ventilation de la matière humide stockée, avec de l'air à température ambiante ou réchauffé, est prévue pour ajuster et réduire la teneur en humidité moyenne des déchets afin de les rendre moins collants, plus dissociables et moins odorants avant leur post-traitement par criblage.

4. Procédé selon l'une quelconque des revendications 1 à 3, **caractérisé en ce que** le stockage est effectué dans un local confiné (13), englobant l'extrémité de sortie (2a) du tambour, le stockage étant situé directement à la jetée des produits sortant du tambour.

5. Procédé selon l'une des revendications 1 à 4, **caractérisé en ce que** le débit d'air de ventilation des déchets stockés est compris entre 3 et 10 m³ d'air/h/ m³ de produit stocké, généralement 5 m³ d'air/h/ m³ de produit stocké.

6. Procédé selon la revendication 4, **caractérisé en ce que** le taux de renouvellement de l'air dans le local confiné (13) est maintenu entre 3 et 10 m³ d'air/h/ m³ de local confiné, généralement 5 m³ d'air/h/ m³ de local confiné.

7. Installation pour le traitement de déchets par réduction granulométrique et fermentation aérobie, comportant :
- un tambour rotatif (2) sensiblement horizontal, apte à recevoir à une extrémité des déchets à traiter, et à délivrer à son autre extrémité les déchets prétraités (D1)
- un système de ventilation du tambour,
- des moyens d'entraînement en rotation du tambour,
- au moins un dispositif (T,V) de sortie du tambour en continu pour les déchets prétraités,
- au moins un dispositif de stockage, tel qu'une fosse de stockage (4) ou un tunnel (5) à fond mouvant, des déchets prétraités en sortie du tambour ;
- au moins un dispositif de ventilation (10,11) des déchets stockés,
- un dispositif de criblage (CR) distant du dispositif de stockage,
- et des moyens de transfert (6,8) des déchets stockés au dispositif de criblage
**caractérisée en ce qu'**elle comporte des moyens d'extraction (E) de l'ensemble des airs viciés, comprenant air de fermentation du tambour (2) et air de séchage de la fosse (4), avec circulation dans le tambour (2) à contre-courant des déchets, vers une installation de désodorisation, pour éviter ainsi la condensation de l'air vicié dans le local.

8. Installation selon la revendication 7 **caractérisée en ce que** l'au moins un dispositif de stockage est une fosse (4) ou un tunnel (5) à fond mouvant.

9. Installation selon la revendication 7 ou 8, **caractérisée en ce que** le dispositif de stockage (4,5) présente une capacité de stockage de plusieurs heures, de préférence de 0,5 à 5 jours, avantageusement 2 jours, suffisante pour pallier l'absence momentanée de personnel assurant le suivi du criblage.

10. Installation selon l'une quelconque des revendications 7 à 9, **caractérisée en ce que** le dispositif de stockage comporte une fosse (4) et les moyens de transfert des déchets stockés comprennent un pont-grappin (6) afin de brasser et faire transiter les déchets vers le criblage.

11. Installation selon la revendication 10, **caractérisée en ce que** la fosse (4) comporte un plancher (9) perforé pour la ventilation sous le plancher et pour une diffusion de l'air de séchage à travers le produit stocké.

12. Installation selon la revendication 10 ou 11, **caractérisée en ce que** la fosse (4) et l'extrémité de sortie (2a) du tambour ventilé sont situées dans un local commun confiné (13).

13. Installation selon l'une quelconque des revendications 7 à 9, **caractérisée en ce que** le dispositif de stockage comporte un tunnel à fond mouvant (5) ou un second stockage dynamique ventilé à tambour tournant.

14. Installation selon l'une quelconque des revendications 7 à 13, **caractérisée en ce que** le volume utile du dispositif de stockage est de 300m³ par jour stocké et par tambour rotatif.

## Patentansprüche

1. Verfahren zur Behandlung von Abfällen durch granulometrische Reduzierung und aerobe Fermentation vor einer abschließenden Behandlung, insbesondere einer Stabilisierungs-, Kompostierungs- oder Methanisierungsbehandlung, bei welchem:
- die Abfälle halbkontinuierlich oder kontinuierlich an einem Ende einer im Wesentlichen horizontalen Drehtrommel (2) eingeleitet werden, die geeignet ist, an ihrem anderen Ende die vorbehandelten Abfälle auszugeben,
- die Trommel belüftet ist und die Abfälle während einer Verweilzeit von geeigneter Dauer, insbesondere von 2 bis 4 Tagen, in der Trommel der granulometrischen Reduzierung und einem ersten Schritt der aeroben Fermentation ausgesetzt werden,
- die vorbehandelten Abfälle einer Siebung unterzogen werden, um eine Fraktion mit feinerer Granulometrie, die mit organischem Material angereichert ist, von einer gröberen Fraktion zu trennen
- der Auslass der Abfälle (D1) aus der Trommel (2) kontinuerlich gewährleistet wird,
- eine Lagerung (4, 5) der vorbehandelten Abfälle am Auslass der Trommel erfolgt,
- eine Belüftung der gelagerten vorbehandelten Abfälle gewährleistet wird,
- und die vorbehandelten Abfälle nach der Lagerung der Siebung zugeführt werden,
**dadurch gekennzeichnet, dass** die aus der Lagerung austretende Belüftungsluft in die Drehtrommel (2) geleitet wird, um zur Belüftung der Trommel (2) beizutragen, bevor sie einer Behandlung, insbesondere einer Desodorierungsbehandlung, zugeführt wird.

2. Verfahren nach Anspruch 1, **dadurch gekennzeichnet, dass** die Dauer der Lagerung der vorbehandelten Abfälle mehrere Stunden beträgt, vorzugsweise 0,5 bis 5 Tage, vorteilhafterweise 2 Tage.

3. Verfahren nach Anspruch 1 oder 2, **dadurch gekennzeichnet, dass** die Belüftung des gelagerten humiden Materials mittels Luft, die Umgebungstemperatur aufweist oder erwärmt ist, vorgesehen ist, um den mittleren Feuchtigkeitsgehalt der Abfälle anzupassen und zu verringern, um diese vor ihrer Nachbehandlung durch Siebung weniger klebrig, trennbarer und weniger riechend zu machen.

4. Verfahren nach einem der Ansprüche 1 bis 3, **dadurch gekennzeichnet, dass** die Lagerung in einem umgrenzten Raum (13) erfolgt, welcher das Auslassende (2a) der Trommel umgibt, wobei die Lagerung sich direkt an dem Auswurf der aus der Trommel austretenden Produkte befindet.

5. Verfahren nach einem der Ansprüche 1 bis 4, **dadurch gekennzeichnet, dass** der Durchsatz der Luft zur Belüftung der gelagerten Abfälle zwischen 3 und 10 m³ Luft/h/m³ an gelagertem Produkt, im Allgemeinen 5 m³ Luft/h/m³ an gelagertem Produkt beträgt.

6. Verfahren nach Anspruch 4, **dadurch gekennzeichnet, dass** die Erneuerungsrate der Luft in dem umgrenzten Raum (13) zwischen 3 und 10 m³ Luft/h/m³ des umgrenzten Orts, im Allgemeinen 5 m³ Luft/h/m³ des umgrenzten Raums beträgt.

7. Anlage zur Bearbeitung von Abfällen durch granulometrische Reduzierung und aerobe Fermentation, mit:
- einer im Wesentlichen horizontalen Drehtrommel (2), die geeignet ist, an einem Ende zu behandelnde Abfälle aufzunehmen, und an ihrem anderen Ende vorbehandelte Abfälle (D1) auszugeben,
- einem Trommelbelüftungssystem,
- Einrichtungen für den drehenden Antrieb der Trommel,
- mindestens einer Vorrichtung (T, V) für den kontinuierlichen Auslass der vorbehandelten Abfälle aus der Trommel,
- mindestens einer Lagerungsvorrichtung für die vorbehandelten Abfälle am Auslass der Trommel, beispielsweise einem Lagerungsgraben (4) oder einem Tunnel (5) mit bewegbarem Boden,
- mindestens einer Vorrichtung (10, 11) zum Belüften der gelagerten Abfälle,
- einer von der Lagerungsvorrichtung entfernten Siebvorrichtung (CR),
- und Einrichtungen (6, 8) zur Übergabe der gelagerten Anfälle an die Siebvorrichtung,
**dadurch gekennzeichnet, dass** sie Einrichtungen (E) zum Extrahieren der gesamten Abluft, welche Fermentationsluft der Trommel (2) und Trocknungsluft des Grabens (4) umfasst, durch Zirkulation in der Trommel (2) im Gegenstrom zu den Abfällen in Richtung einer Desodorierungsanlage aufweist, um so das Kondensieren von Abluft in dem Raum zu vermeiden.

8. Anlage nach Anspruch 7, **dadurch gekennzeichnet, dass** mindestens eine Lagerungsvorrichtung ein Graben (4) oder ein Tunnel (5) mit bewegbarem Boden ist.

9. Anlage nach Anspruch 7 oder 8, **dadurch gekennzeichnet, dass** die Lagerungsvorrichtung (4, 5) eine Lagerkapazität von mehreren Stunden, vorzugsweise 0,5 bis 5 Tagen, vorteilhafterweise 2 Tagen aufweist, die ausreicht, die vorübergehende Abwesenheit von die Siebung gewährleistendem Personal aufzufangen.

10. Anlage nach einem der Ansprüche 7 bis 9, **dadurch gekennzeichnet, dass** die Lagerungsvorrichtung einen Graben (4) aufweist und die Einrichtungen zur Übergabe der gelagerten Abfälle einen Kran-Greifer (6) aufweisen, um die Abfälle zu mischen und der Siebung zuzuführen.

11. Anlage nach Anspruch 10, **dadurch gekennzeichnet, dass** der Graben (4) einen perforierten Boden (9) für die Belüftung unter dem Boden und für eine Verteilung der Trocknungsluft durch das gelagerte Produkt aufweist.

12. Anlage nach Anspruch 10 oder 11, **dadurch gekennzeichnet, dass** der Graben (4) und das Auslassende (2a) der belüfteten Trommel sich in einem gemeinsamen umgrenzten Raum (13) befinden.

13. Anlage nach einem der Ansprüche 7 bis 9, **dadurch gekennzeichnet, dass** die Lagerungsvorrichtung einen Tunnel mit bewegbarem Boden (5) oder eine zweite belüftete dynamische Lagerung mit einer Drehtrommel aufweist.

14. Anlage nach einem der Ansprüche 7 bis 13, **dadurch gekennzeichnet, dass** das Nutzvolumen der Lagerungsvorrichtung 300 m³ pro Lagerungstag und pro Drehtrommel beträgt.

## Claims

1. A process for treating waste by particle size reduction and aerobic fermentation, prior to a final treatment, in particular a stabilization, composting or methanization treatment, according to which:
- the waste is introduced semi-continuously, or continuously, at one end of a substantially horizontal rotary drum (2), suitable for delivering the pretreated waste at its other end,
- the drum is ventilated and the waste undergoes, in the drum, the particle size reduction and a first step of aerobic fermentation, with an appropriate residence time, in particular of 2 to 4 days,
- the pretreated waste is subjected to a screening operation in order to separate a fraction of finer particle size enriched in organic material from a coarser fraction,
- the waste (D1) leaves the drum (2) continuously,
- a storage (4,5) of the pretreated waste is carried out on leaving the drum,
- a ventilation of the stored pretreated waste is provided,
- and the pretreated waste, after storage, is transferred to the screening unit,
**characterized in that** the ventilation air leaving the storage area is sent to the rotary drum (2) to contribute to the ventilation of the drum before being sent to a treatment, in particular an odor control treatment.

2. The process as claimed in claim 1, **characterized in that** the duration of the storage of the pretreated waste is several hours, preferably from 0.5 to 5 days, advantageously 2 days.

3. The process as claimed in claim 1 or 2, **characterized in that** the ventilation of the stored wet material, with air at ambient temperature or heated air, is provided to adjust and reduce the mean moisture content of the waste in order to make it less sticky, more separable and less odorous before the post-treatment thereof by screening.

4. The process as claimed in any one of claims 1 to 3, **characterized in that** the storage is carried out in enclosed premises (13), encompassing the outlet end (2a) of the drum, the storage area being located directly at the landing site of the products leaving the drum.

5. The process as claimed in one of claims 1 to 4, **characterized in that** the ventilation air flow rate for the stored waste is between 3 and 10 m³ of air/h/m³ of product stored, generally 5 m³ of air/h/m³ of product stored.

6. The process as claimed in claim 4, **characterized in that** the air change rate in the enclosed premises (13) is maintained between 3 and 10 m³ of air/h/m³ of enclosed premises, generally 5 m³ of air/h/m³ of enclosed premises.

7. A facility for treating waste by particle size reduction and aerobic fermentation, comprising:
- a substantially horizontal rotary drum (2), suitable for receiving waste to be treated at one end, and for delivering at its other end the pretreated waste (D1),
- a system for ventilating the drum,
- means for rotating the drum,
- at least one continuous drum output device (T,V) for the pretreated waste,
- at least one storage device, such as a storage pit (4) or a conveyor tunnel (5), for storing the pretreated waste leaving the drum,
- at least one device (10,11) for ventilating the stored waste,
- a screening device (CR) at a distance from the storage device,
- and means (6,8) for transferring the stored waste to the screening device,
**characterized in that** its comprises means (E) for extracting all of the foul air, including fermentation air from the drum (2) and drying air from the pit (4), with circulation in the drum (2) countercurrent to the waste, to an odor control facility, to thus prevent the condensation of the foul air in the premises.

8. The facility as claimed in claim 7, **characterized in that** the at least one storage device is a storage pit (4) or a conveyor tunnel (5).

9. The facility as claimed in claim 7 or 8, **characterized in that** the storage device (4, 5) has a storage capacity of several hours, preferably of 0.5 to 5 days, advantageously 2 days, sufficient to compensate for the momentary absence of personnel who carry out the monitoring of the screening.

10. The facility as claimed in claim 7 to 9, **characterized in that** the storage device comprises a pit (4) and the means for transferring the stored waste comprise a grab-bridge (6) in order to stir and transfer the waste to the screening unit.

11. The facility as claimed in claim 10, **characterized in that** the pit (4) comprises a perforated floor (9) for underfloor ventilation and for a diffusion of the drying air through the stored product.

12. The facility as claimed in claim 10 or 11, **characterized in that** the pit (4) and the outlet end (2a) of the ventilated drum are located in enclosed common premises (13).

13. The facility as claimed in claim 7 or 9, **characterized in that** the storage device comprises a conveyor tunnel (5) or a second ventilated dynamic storage with a revolving drum.

14. The facility as claimed in any one of claims 7 to 13, **characterized in that** the useful volume of the storage device is 300 m³ per day stored and per rotary drum.
